# EUROPEAN PATENT APPLICATION

(11) **EP 4 703 213 A1**
(43) Date of publication of application: **04.03.2026**
(21) Application number: 23934378.3
(22) Date of filing: 24.04.2023
(51) Int. Cl.: B60R 16/023

(54) **CONTROL CIRCUIT, WAKE-UP AND SLEEP METHOD, BATTERY MANAGEMENT SYSTEM, AND VEHICLE**

(71) Applicant: Contemporary Amperex Technology Co., Limited, Ningde, Fujian 352100 (CN)
(72) Inventor: LIU, Yu, Ningde, Fujian 352100 (CN); ZHANG, Xiaofeng, Ningde, Fujian 352100 (CN); CHU, Le, Ningde, Fujian 352100 (CN)
(74) Representative: Ran, Handong
(86) International application number: PCT/CN2023/090316
(87) International publication number: WO 2024/221173

(57) **Abstract**

The present application relates to a control circuit, a wake-up and sleep method, a battery management system, and a vehicle. The control circuit comprises a CAN transceiver and a signal circuit which are connected to each other, wherein the signal circuit is connected to both an external controlled device and a controller; the CAN transceiver is configured to output a first control signal to the signal circuit according to a CAN bus message; and the signal circuit is configured to output a wake-up signal to the controlled device according to the first control signal, and output a sleep signal to the controlled device according to a second control signal output by the controller. By using the present application, the application range of the circuit can be widened, and the cost can be reduced.

## Description

### TECHNICAL FIELD

The present application relates to the technical field of vehicles, and in particular, to a control circuit, a wake-up and sleep method, a battery management system, and a vehicle.

### BACKGROUND

With the development of new energy technologies, electric vehicles are becoming more and more popular among users. In the electric vehicles, the battery management system can be woken up by a signal under certain conditions.

At present, the wake-up signal is mainly output through a chip with a controller area network (CAN) wake-up function. However, costs of the chip with the CAN wake-up function are relatively high.

### SUMMARY OF THE INVENTION

Based on the above problems, the present application provides a control circuit, a wake-up and sleep method, a battery management system, and a vehicle, and a wake-up function and a sleep function can be implemented, such that the present application has a wide range of applications, and can also facilitate reducing the production costs of electric vehicles.

In a first aspect, the present application provides a control circuit. The control circuit includes a CAN transceiver and a signal circuit connected to each other, and the signal circuit is connected to both an external controlled device and a controller; the CAN transceiver is configured to output a first control signal to the signal circuit according to a CAN bus message; and the signal circuit is configured to output a wake-up signal to the controlled device according to the first control signal, and output a sleep signal to the controlled device according to a second control signal output by the controller.

In the technical solutions of embodiments of the present application, the control circuit is constructed based on the CAN transceiver, and the CAN transceiver has low costs, thereby being suitable for mass production, which can facilitate reducing the production costs of the electric vehicles. Moreover, the control circuit has both the wake-up function and the sleep function, thereby having more comprehensive functions and a wider range of applications.

In some embodiments, the signal circuit includes a switch circuit and a trigger circuit; the switch circuit is connected to both the CAN transceiver and the controller, and the trigger circuit is connected to both the switch circuit and the controlled device; the switch circuit is configured to output a trigger signal to the trigger circuit according to the first control signal, and output a set signal to the trigger circuit according to the second control signal; and the trigger circuit is configured to output the wake-up signal to the controlled device according to the trigger signal, and output the sleep signal to the controlled device according to the set signal. In the technical solutions of the embodiments of the present application, based on the CAN transceiver, the wake-up function and the sleep function are implemented through the switch circuit and the trigger circuit, and the circuit is simple in control logic and has low construction costs, which can facilitate reducing the production costs of the electric vehicles.

In some embodiments, the switch circuit includes a first switch circuit and a second switch circuit; the first switch circuit is connected to both the CAN transceiver and the trigger circuit; the second switch circuit is connected to both the trigger circuit and the controller; the first switch circuit is configured to output the trigger signal to the trigger circuit under the control of the first control signal; and the second switch circuit is configured to output the set signal to the trigger circuit under the control of the second control signal. In the technical solutions of the embodiments of the present application, the trigger circuit is triggered and set through the first switch circuit and the second switch circuit, respectively, thereby implementing the wake-up function and the sleep function, and the circuit not only has a wide range of applications, but also has low construction costs, which can facilitate reducing the production costs of the electric vehicles.

In some embodiments, the first switch circuit is connected to a data output port of the CAN transceiver; and the first switch circuit is configured to acquire the first control signal output by the data output port of the CAN transceiver, and output the trigger signal under the control of the first control signal. In the technical solutions of the embodiments of the present application, the wake-up function is implemented through the data output port of the CAN transceiver, and the CAN transceiver has low costs, thereby being suitable for mass production, which can facilitate reducing the production costs of the electric vehicles.

In some embodiments, the first switch circuit includes a first switching transistor; and a control electrode of the first switching transistor is connected to the data output port of the CAN transceiver, a first electrode of the first switching transistor is connected to a first power supply terminal, and a second electrode of the first switching transistor is connected to the trigger circuit. In the technical solutions of the embodiments of the present application, the first switch circuit is constructed based on the switching transistor, such that the wake-up function can be implemented through the data output port of the CAN transceiver; and the CAN transceiver has low costs, and the first switch circuit is easy to construct, such that the wake-up function can be implemented more easily.

In some embodiments, the first switch circuit is connected to both a high-level port and a low-level port of the CAN transceiver; and the first switch circuit is configured to acquire the first control signal output by the high-level port and the low-level port, and output the trigger signal under the control of the first control signal. In the technical solutions of the embodiments of the present application, the wake-up function is implemented through the high-level port and the low-level port of the CAN transceiver; and the CAN transceiver has low costs, thereby being suitable for mass production, which can facilitate reducing the production costs of the electric vehicles.

In some embodiments, the first switch circuit includes a comparator and a second switching transistor; and two input ports of the comparator are connected to the high-level port and the low-level port of the CAN transceiver, respectively, and an output port of the comparator is connected to a control electrode of the second switching transistor; and a first electrode of the second switching transistor is connected to a second power supply terminal, and a second electrode of the second switching transistor is connected to the trigger circuit. In the technical solutions of the embodiments of the present application, the first switch circuit is constructed based on the switching transistor and the comparator, such that the wake-up function can be implemented through the high-level port and the low-level port of the CAN transceiver; and the CAN transceiver has low costs, and the first switch circuit is easy to construct, such that the wake-up function can be implemented more easily.

In some embodiments, the second switch circuit includes a third switching transistor; and a control electrode of the third switching transistor is connected to the controller, a first electrode of the third switching transistor is connected to both a third power supply terminal and the trigger circuit, and a second electrode of the third switching transistor is grounded. In the technical solutions of the embodiments of the present application, the second switch circuit is constructed based on the switching transistor, and can cooperate with the trigger circuit to implement the sleep function, thereby widening an application scope of the circuit.

In some embodiments, the trigger circuit includes a trigger, an input port of the trigger is connected to a fourth power supply terminal, a trigger port of the trigger is connected to the first switch circuit, a set port of the trigger is connected to the second switch circuit, and an output port of the trigger is connected to the controlled device. In the technical solutions of the embodiments of the present application, the trigger circuit is constructed based on the trigger so as to implement the wake-up function and the sleep function, thereby widening the application scope of the circuit.

In some embodiments, the control circuit also includes a standby circuit, and the standby circuit is connected to both the CAN transceiver and the controller; and the standby circuit is configured to acquire a third control signal output by the controller, and output a standby signal to the CAN transceiver under the control of the third control signal. In the technical solutions of the embodiments of the present application, the CAN transceiver enters a standby mode through the standby circuit, such that the power consumption of the circuit can be reduced.

In some embodiments, the standby circuit includes a fourth switching transistor; and a control electrode of the fourth switching transistor is connected to the controller, a first electrode of the fourth switching transistor is connected to both a fifth power supply terminal and a standby port of the CAN transceiver, and a second electrode of the fourth switching transistor is grounded. In the technical solutions of the embodiments of the present application, the standby circuit is constructed based on the switching transistor, so that the CAN transceiver can enter the standby mode after the controlled device enters a sleep mode, thereby reducing the power consumption of the circuit.

In a second aspect, the present application further provides a wake-up and sleep method. The wake-up and sleep method is applied to the control circuit as in the first aspect, and the method includes:
generating a first control signal according to a CAN bus message, and outputting a wake-up signal, according to the first control signal, to a controlled device external to the control circuit; and
acquiring a second control signal, and outputting a sleep signal to the controlled device according to the second control signal.

In the technical solutions of embodiments of the present application, the control circuit can implement the wake-up function and the sleep function, and therefore the circuit has a wide range of applications; and the circuit is constructed based on a CAN transceiver, and the CAN transceiver has low costs, which can facilitate reducing the production costs of the electric vehicles.

In a third aspect, the present application further provides a battery management system. The battery management system includes a controller, a controlled device, and the control circuit as in the first aspect.

In the technical solutions of embodiments of the present application, the control circuit enables the battery management system to have the functions of automatically waking up a power supply and automatically putting the power supply into a sleep mode, so that the battery management system has more comprehensive functions. Moreover, the control circuit is constructed based on a CAN transceiver, and the CAN transceiver has low costs, which can facilitate reducing the costs of the battery management system.

In a fourth aspect, the present application further provides a vehicle. The vehicle includes a controller, a controlled device, and the control circuit as in the first aspect.

In the technical solutions of embodiments of the present application, the control circuit enables the vehicle to have the functions of automatically waking up a power supply and automatically putting the power supply into a sleep mode, so that the vehicle has more comprehensive functions. Moreover, the control circuit is constructed based on a CAN transceiver, and the CAN transceiver has low costs, which can facilitate reducing the production costs of the vehicle, thereby improving the cost performance of the vehicle.

### BRIEF DESCRIPTION OF DRAWINGS

Various other advantages and benefits will become apparent to those of ordinary skill in the art upon reading the following detailed description of the optional implementations. The accompanying drawings are for the purpose of illustrating the optional implementations only and are not to be considered a limitation to the present application. Moreover, in all of the accompanying drawings, the same components are indicated by the same reference numerals. In the drawings:
FIG. 1 is a schematic structural diagram of a control circuit according to an embodiment of the present application;
FIG. 2 is a schematic structural diagram of a signal circuit in the control circuit according to an embodiment of the present application;
FIG. 3 is a schematic structural diagram of a switch circuit in the control circuit according to an embodiment of the present application;
FIG. 4 is a schematic diagram of a connection mode of a first switch circuit according to an embodiment of the present application;
FIG. 5 is a schematic structural diagram of the first switch circuit according to an embodiment of the present application;
FIG. 6 is a schematic diagram of a connection mode of a first switch circuit according to an embodiment of the present application;
FIG. 7 is a schematic structural diagram of the first switch circuit according to an embodiment of the present application;
FIG. 8 is a schematic structural diagram of a second switch circuit according to an embodiment of the present application;
FIG. 9 is a schematic structural diagram of a trigger circuit according to an embodiment of the present application;
FIG. 10 is a schematic structural diagram of a trigger circuit according to an embodiment of the present application;
FIG. 11 is a schematic diagram of a connection mode of a standby circuit according to an embodiment of the present application;
FIG. 12 is a schematic diagram of a connection mode of a standby circuit according to an embodiment of the present application;
FIG. 13 is a schematic structural diagram of the standby circuit according to an embodiment of the present application; and
FIG. 14 is a schematic structural diagram of the standby circuit according to an embodiment of the present application.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "a plurality of groups" refers to two or more (including two) groups, and "a plurality of sheets" refers to two or more (including two) sheets.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

With the development of new energy technologies, electric vehicles are becoming more and more popular among users. In the electric vehicles, the battery management system can be woken up by a signal under certain conditions. At present, the wake-up signal is mainly output through a chip with a controller area network (CAN) wake-up function. However, costs of the chip with the CAN wake-up function are relatively high. Moreover, the chip with the CAN wake-up function does not have a sleep function.

The present application provides a control circuit, the control circuit is constructed based on a CAN transceiver, and the CAN transceiver has low costs, thereby being suitable for mass production, which can facilitate reducing the production costs of the electric vehicles. Moreover, the control circuit has both the wake-up function and the sleep function, thereby having more comprehensive functions and a wider range of applications.

The control circuit disclosed in the embodiments of the present application can be used, but not limited to, in an electrical apparatus, such as a vehicle, a ship, or an aircraft, and the technical solutions involved in the embodiments of the present application will be introduced below.

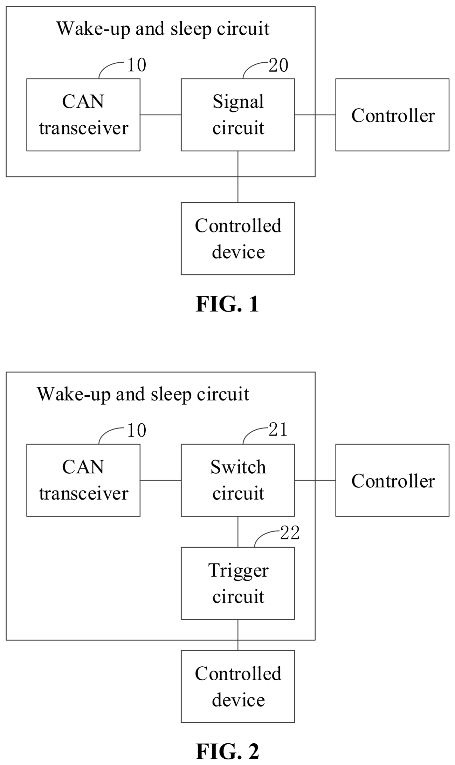

According to some embodiments of the present application, referring to FIG. 1, a control circuit is provided. The control circuit includes a CAN transceiver 10 and a signal circuit 20 connected to each other, and the signal circuit 20 is connected to both an external controlled device and a controller; the CAN transceiver 10 is configured to output a first control signal to the signal circuit 20 according to a CAN bus message; and the signal circuit 20 is configured to output a wake-up signal to the controlled device according to the first control signal, and output a sleep signal to the controlled device according to a second control signal output by the controller.

In the embodiments of the present application, the control circuit includes the CAN transceiver 10 and the signal circuit 20. The CAN transceiver 10 is connected to the signal circuit 20, and the signal circuit 20 is also connected to the controlled device and the controller external to the control circuit.

In a stage of waking up the controlled device, the CAN transceiver 10 receives the CAN bus message from a CAN bus, and outputs the first control signal to the signal circuit 20 according to the CAN bus message. The signal circuit 20 receives the first control signal, and outputs the wake-up signal to the controlled device according to the first control signal, and the wake-up signal is used to wake up the controlled device.

In a stage of putting the controlled device into a sleep mode, the controller inputs the second control signal to the signal circuit 20 in the control circuit, the signal circuit 20 outputs the sleep signal to the controlled device according to the second control signal, and the sleep signal is used to instruct the controlled device to enter a sleep state.

The above controlled device may be a power supply or other components in a vehicle, and the above controller may be a microcontroller unit (MCU). The embodiments of the present application do not limit the CAN transceiver, the controlled device, and the controller, which can be selected according to actual conditions.

In the above embodiments, the control circuit includes the CAN transceiver and the signal circuit connected to each other, and the signal circuit is connected to both the external controlled device and the controller; the CAN transceiver outputs the first control signal to the signal circuit according to the CAN bus message; and the signal circuit outputs the wake-up signal to the controlled device according to the first control signal, and outputs the sleep signal to the controlled device according to the second control signal output by the controller. Since the control circuit is constructed based on the CAN transceiver, and the CAN transceiver has low costs, it is suitable for mass production and can reduce the production costs of electric vehicles. Moreover, the control circuit has both the wake-up function and the sleep function, thereby having more comprehensive functions and a wider range of applications.

According to some embodiments of the present application, referring to FIG. 2, the signal circuit 20 includes a switch circuit 21 and a trigger circuit 22; the switch circuit 21 is connected to both the CAN transceiver 10 and the controller, and the trigger circuit 22 is connected to both the switch circuit 21 and the controlled device; the switch circuit 21 is configured to output a trigger signal to the trigger circuit 22 according to the first control signal, and output a set signal to the trigger circuit 22 according to the second control signal; and the trigger circuit 22 is configured to output the wake-up signal to the controlled device according to the trigger signal, and output the sleep signal to the controlled device according to the set signal.

In the embodiments of the present application, the signal circuit 20 includes the switch circuit 21 and the trigger circuit 22; the switch circuit 21 is connected to both the CAN transceiver 10 and the controller external to the control circuit; and the trigger circuit 22 is connected to both the switch circuit 21 and the controlled device.

In the stage of waking up the controlled device, the CAN transceiver 10 receives the CAN bus message from the CAN bus, and outputs the first control signal to the switch circuit 21 according to the CAN bus message. The switch circuit 21 receives the first control signal, and outputs the trigger signal to the trigger circuit 22 according to the first control signal. The trigger circuit 22 is triggered after receiving the trigger signal and outputs the wake-up signal to the controlled device. The controlled device receives the wake-up signal and is woken up.

For example, the controlled device is a power supply, and the trigger circuit 22 outputs the wake-up signal to the power supply to wake up the power supply, such that the power supply supplies power to electrical components in a vehicle.

In the stage of putting the controlled device into a sleep mode, the external controller outputs the second control signal to the switch circuit 21. The switch circuit 21 receives the second control signal, and outputs the set signal to the trigger circuit 22 according to the second control signal. The trigger circuit 22 receives the set signal and outputs the sleep signal to the controlled device according to the set signal. The controlled device receives the sleep signal and enters the sleep state under the control of the sleep signal.

For example, the controlled device is the power supply, and the trigger circuit 22 outputs the sleep signal to the power supply, so that the power supply enters the sleep state and no longer supplies power to the electrical components in the vehicle.

In the above embodiments, the signal circuit includes the switch circuit and the trigger circuit; the switch circuit is connected to both the CAN transceiver and the controller, and the trigger circuit is connected to both the switch circuit and the controlled device; the switch circuit is configured to output the trigger signal to the trigger circuit according to the first control signal, and output the set signal to the trigger circuit according to the second control signal; and the trigger circuit is configured to output the wake-up signal to the controlled device according to the trigger signal, and output the sleep signal to the controlled device according to the set signal. In the embodiments of the present application, based on the CAN transceiver, the wake-up function and the sleep function are implemented through the switch circuit and the trigger circuit; and the circuit is simple in control logic and has low construction costs, which can facilitate reducing the production costs of the electric vehicles.

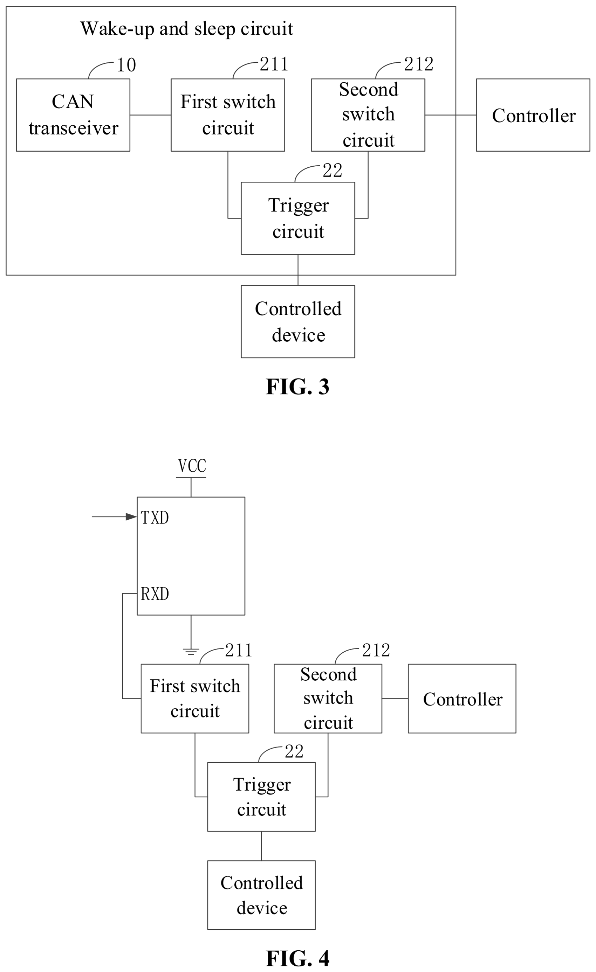

According to some embodiments of the present application, as shown in FIG. 3, the switch circuit 21 includes a first switch circuit 211 and a second switch circuit 212; the first switch circuit 211 is connected to both the CAN transceiver 10 and the trigger circuit 22; the second switch circuit 212 is connected to both the trigger circuit 22 and the controller; the first switch circuit 211 is configured to output the trigger signal to the trigger circuit 22 under the control of the first control signal; and the second switch circuit 212 is configured to output the set signal to the trigger circuit 22 under the control of the second control signal.

In the embodiments of the present application, the switch circuit 21 includes the first switch circuit 211 and the second switch circuit 212; and the first switch circuit 211 is connected to both the CAN transceiver 10 and the trigger circuit 22, and the second switch circuit 212 is connected to both the trigger circuit 22 and the external controller.

In the stage of waking up the controlled device, the CAN transceiver 10 receives the CAN bus message from a CAN bus, and outputs the first control signal to the first switch circuit 211 according to the CAN bus message. The first switch circuit 211 receives the first control signal and outputs the trigger signal to the trigger circuit 22 according to the first control signal. The trigger circuit 22 is triggered after receiving the trigger signal and outputs the wake-up signal to the controlled device. The controlled device receives the wake-up signal and is woken up.

In the stage of putting the controlled device into a sleep mode, the external controller outputs the second control signal to the second switch circuit 212. The second switch circuit 212 receives the second control signal, and outputs the set signal to the trigger circuit 22 according to the second control signal. The trigger circuit 22 receives the set signal and outputs the sleep signal to the controlled device according to the set signal. After receiving the sleep signal, the controlled device enters the sleep state.

In the above embodiments, the switch circuit includes the first switch circuit and the second switch circuit; the first switch circuit is connected to both the CAN transceiver and the trigger circuit; the second switch circuit is connected to both the trigger circuit and the controller; the first switch circuit outputs the trigger signal to the trigger circuit under the control of the first control signal; and the second switch circuit outputs the set signal to the trigger circuit under the control of the second control signal. In the embodiments of the present application, the trigger circuit is triggered and set through the first switch circuit and the second switch circuit, respectively, thereby implementing the wake-up function and the sleep function; and the circuit not only has a wide range of applications, but also has low construction costs, which can facilitate reducing the production costs of the electric vehicles.

According to some embodiments of the present application, referring to FIG. 4, the first switch circuit 211 is connected to a data output port RXD of the CAN transceiver 10; and the first switch circuit 211 is configured to acquire the first control signal output by the data output port RXD of the CAN transceiver 10, and output the trigger signal under the control of the first control signal.

In the embodiments of the present application, the CAN transceiver 10 is provided with at least one power supply port, a data input port TXD, and the data output port RXD. The power supply port can provide power and a bias voltage for the CAN transceiver 10; and the data input port TXD can receive the CAN bus message or the signal input by the controller, and the data output port RXD can output the control signal. The first switch circuit 211 is connected to the data output port RXD of the CAN transceiver 10.

In the stage of waking up the controlled device, the data input port TXD of the CAN transceiver 10 receives the CAN bus message, and outputs the first control signal from the data output port RXD according to the CAN bus message. The first switch circuit 211 receives the first control signal and outputs the trigger signal to the trigger circuit 22 under the control of the first control signal.

In the above embodiments, the first switch circuit is connected to the data output port of the CAN transceiver; and the first switch circuit acquires the first control signal output by the data output port of the CAN transceiver, and outputs the trigger signal under the control of the first control signal. In the embodiments of the present application, the wake-up function is implemented through the data output port of the CAN transceiver, and the CAN transceiver has low costs, thereby being suitable for mass production, which can facilitate reducing the production costs of the electric vehicles.

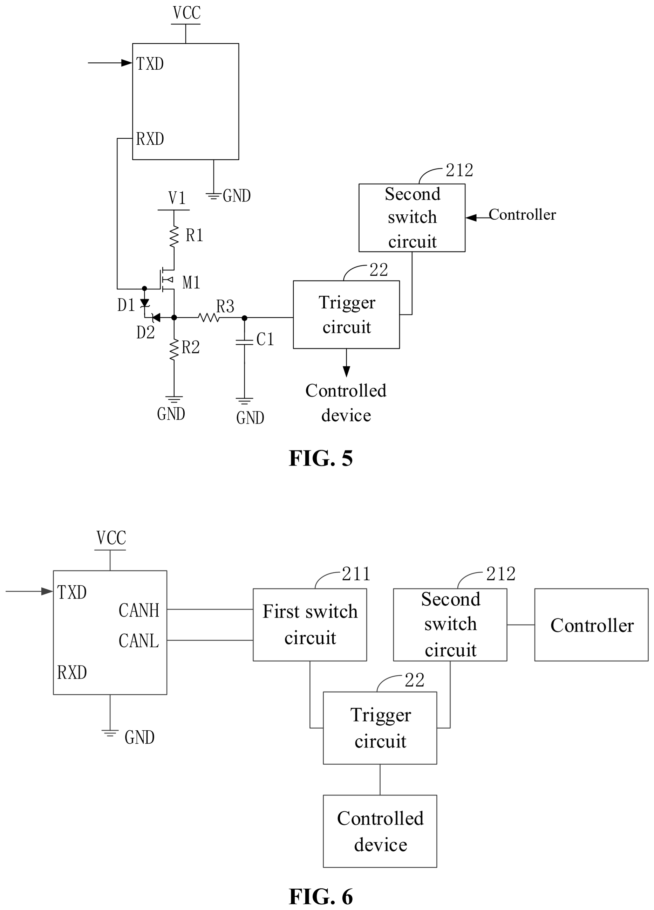

According to some embodiments of the present application, referring to FIG. 5, the first switch circuit 211 includes a first switching transistor M1; a control electrode of the first switching transistor M1 is connected to the data output port RXD of the CAN transceiver 10, a first electrode of the first switching transistor M1 is connected to a first power supply terminal V1, and a second electrode of the first switching transistor M1 is connected to the trigger circuit 22.

In the embodiments of the present application, the first switch circuit 211 includes the first switching transistor M1, a resistor R1, a resistor R2, a resistor R3, a diode D1, a diode D2, and a capacitor C1. The control electrode of the first switching transistor M1 is connected to the data output port RXD of the CAN transceiver 10; the first electrode of the first switching transistor M1 is connected to a first end of the resistor R1, and a second end of the resistor R1 is connected to the first power supply terminal V1; a second electrode of the first switching transistor M1 is connected to a first end of the resistor R2, and a second end of the resistor R2 is connected to the trigger circuit 22; and the second electrode of the first switching transistor M1 is also connected to a first end of the resistor R3, and a second end of the resistor R3 is grounded. A first end of the capacitor C1 is connected to the trigger circuit 22, and a second end of the capacitor C1 is grounded.

Taking the first switching transistor M1 as an NMOS transistor as an example, the CAN transceiver 10 outputs a high-level signal from the data output port RXD to the control electrode of the first switching transistor M1; and the first switching transistor M1 is turned on under the control of the high-level signal, and the first power supply terminal V1, the resistor R1, the first switching transistor M1, the resistor R2, and a ground terminal GND form a path, and the second electrode of the first switching transistor M1 outputs the trigger signal to the trigger circuit 22 through the resistor R3.

The above diode D1 and diode D2 play a clamping role, which can limit a value of a voltage difference between the control electrode and the second electrode of the first switching transistor M1, thereby protecting the first switching transistor M1; and the above capacitor C1 plays a filtering role, which can filter out interference signals in the trigger signal.

The above first switch circuit 211 may be implemented by a switch chip, which is not limited in the embodiments of the present application and may be configured according to actual conditions.

In the above embodiments, the first switch circuit includes the first switching transistor; and the control electrode of the first switching transistor is connected to the data output port of the CAN transceiver, the first electrode of the first switching transistor is connected to the first power supply terminal, and the second electrode of the first switching transistor is connected to the trigger circuit. In the embodiments of the present application, the first switch circuit is constructed based on the switching transistor, such that the wake-up function can be implemented through the data output port of the CAN transceiver; and the CAN transceiver has low costs, and the first switch circuit is easy to construct, such that the wake-up function can be implemented more easily.

According to some embodiments of the present application, referring to FIG. 6, the first switch circuit 211 is connected to both a high-level port CANH and a low-level port CANL of the CAN transceiver 10; and the first switch circuit 211 is configured to acquire the first control signal output by the high-level port CANL and the low-level port CANL, and output the trigger signal under the control of the first control signal.

In the embodiments of the present application, the CAN transceiver 10 may also be provided with the high-level port CANH and the low-level port CANL. When the CAN transceiver 10 is in a working state, the high-level port CANH outputs a high-level signal, and the low-level port CANL outputs a low-level signal, that is, the high-level port CANH and the low-level port CANL may output differential signals. When the CAN transceiver 10 is in a standby state, the high-level port CANH and the low-level port CANL both output the low-level signal. The first switch circuit 211 is connected to both the high-level port CANH and the low-level port CANL of the CAN transceiver 10.

In the stage of waking up the controlled device, the data input port TXD of the CAN transceiver 10 receives the CAN bus message, outputs the high-level signal from the high-level port CANH according to the CAN bus message, and outputs the low-level signal from the low-level port CANL. The first switch circuit 211 receives the high-level signal and the low-level signal, and namely, receives the first control signal, and outputs the trigger signal to the trigger circuit 22 under the control of the first control signal.

In the above embodiments, the first switch circuit is connected to both the high-level port and the low-level port of the CAN transceiver; and the first switch circuit acquires the first control signal output by the high-level port and the low-level port, and outputs the trigger signal under the control of the first control signal. In the embodiments of the present application, the wake-up function is implemented through the high-level port and the low-level port of the CAN transceiver; and the CAN transceiver has low costs, thereby being suitable for mass production, which can facilitate reducing the production costs of the electric vehicles.

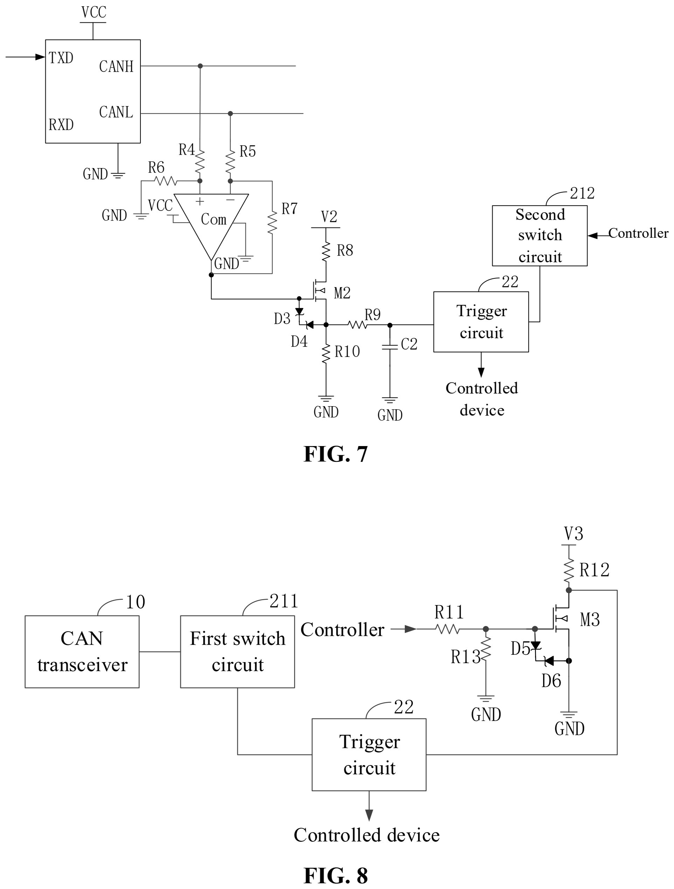

According to some embodiments of the present application, referring to FIG. 7, the first switch circuit 211 includes a second switching transistor M2 and a comparator Com; two input ports of the comparator Com are connected to the high-level port and the low-level port of the CAN transceiver 10, respectively, and an output port of the comparator Com is connected to a control electrode of the second switching transistor M2; and a first electrode of the second switching transistor M2 is connected to a second power supply terminal V2, and a second electrode of the second switching transistor M2 is connected to the trigger circuit 22.

In the embodiments of the present application, the first switch circuit 211 includes the second switching transistor M2, the comparator Com, a resistor R4, a resistor R5, a resistor R6, a resistor R7, a resistor R8, a resistor R9, a resistor R10, a diode D3, a diode D4, and a capacitor C2.

A forward input port of the comparator Com is connected to a first end of the resistor R4, and a second end of the resistor R4 is connected to the high-level port CANH of the CAN transceiver 10; a reverse input port of the comparator Com is connected to a first end of the resistor R5, and a second end of the resistor R5 is connected to the low-level port CANL of the CAN transceiver 10; and an output port of the comparator Com is connected to the control electrode of the second switching transistor M2. The forward input port of the comparator Com is also connected to a first end of the resistor R6, and a second end of the resistor R6 is grounded. A first end of the resistor R7 is connected to the reverse input port of the comparator Com, and a second end of the resistor R7 is connected to the output port of the comparator Com.

The control electrode of the second switching transistor M2 is connected to the output port of the comparator Com; the first electrode of the second switching transistor M2 is connected to a first end of the resistor R8, and a second end of the resistor R8 is connected to the second power supply terminal V2; the second electrode of the second switching transistor M2 is connected to a first end of the resistor R9, and a second end of the resistor R9 is connected to the trigger circuit 22; and the second electrode of the second switching transistor M2 is also connected to a first end of the resistor R10, and a second end of the resistor R10 is grounded. A first end of the capacitor C2 is connected to the trigger circuit 22, and a second end of the capacitor C2 is grounded.

Taking the second switching transistor M2 as an NMOS transistor as an example, the CAN transceiver 10 outputs the high-level signal from the data output port RXD to the control electrode of the second switching transistor M2; and the second switching transistor M2 is turned on under the control of the high-level signal, and the second power supply terminal V2, the resistor R8, the second switching transistor M2, the resistor R9, and a ground terminal GND form a path, and the second electrode of the second switching transistor M2 outputs the trigger signal to the trigger circuit 22 through the resistor R10.

The above diode D3 and diode D4 play a clamping role, which can limit a value of a voltage difference between the control electrode and the second electrode of the second switching transistor M2, thereby protecting the second switching transistor M2; and the above capacitor C2 plays a filtering role, which can filter out interference signals in the trigger signal.

The above first switch circuit 211 may be implemented by a switch chip, which is not limited in the embodiments of the present application and may be configured according to actual conditions.

In the above embodiments, the first switch circuit includes the comparator and the second switching transistor; and the two input ports of the comparator are connected to the high-level port and the low-level port of the CAN transceiver, respectively, and the output port of the comparator is connected to the control electrode of the second switching transistor; and the first electrode of the second switching transistor is connected to the second power supply terminal, and the second electrode of the second switching transistor is connected to the trigger circuit. In the embodiments of the present application, the first switch circuit is constructed based on the switching transistor and the comparator, such that the wake-up function can be implemented through the high-level port and the low-level port of the CAN transceiver; and the CAN transceiver has low costs, and the first switch circuit is easy to construct, such that the wake-up function can be implemented more easily.

According to some embodiments of the present application, referring to FIG. 8, the second switch circuit 212 includes a third switching transistor M3; a control electrode of the third switching transistor M3 is connected to the controller, a first electrode of the third switching transistor M3 is connected to both a third power supply terminal V3 and the trigger circuit 22, and a second electrode of the third switching transistor M3 is grounded.

In the embodiments of the present application, the second switch circuit 212 includes the third switching transistor M3, a resistor R11, a resistor R12, a resistor R13, a diode D5, and a diode D6. The control electrode of the third switching transistor M3 is connected to a first end of the resistor R11, and a second end of the resistor R11 is connected to the external controller; the first electrode of the third switching transistor M3 is connected to a first end of the resistor R12, and a second end of the resistor R12 is connected to the third power supply terminal V3, and the first electrode of the third switching transistor M3 is also connected to the trigger circuit 22; and the second electrode of the third switching transistor M3 is grounded. A first end of the resistor R13 is connected to the control electrode of the third switching transistor, and a second end of the resistor R13 is grounded.

Taking the third switching transistor M3 as an NMOS transistor as an example, the controller outputs the high-level signal to the control electrode of the third switching transistor M3 through the resistor R11; the third switching transistor M3 is turned on under the control of the high-level signal, and the third power supply terminal, the resistor R12, the third switching transistor M3, and a ground terminal GND form a path, and the first electrode of the second switching transistor M2 outputs the trigger signal to the trigger circuit 22.

The above diode D5 and diode D6 play a clamping role, which can limit a value of a voltage difference between the control electrode and the second electrode of the third switching transistor M3, thereby protecting the third switching transistor M3.

The above second switch circuit 212 may be implemented by a switch chip, which is not limited in the embodiments of the present application and may be configured according to actual conditions.

In the above embodiments, the second switch circuit includes the third switching transistor; and the control electrode of the third switching transistor is connected to the controller, the first electrode of the third switching transistor is connected to both the third power supply terminal and the trigger circuit, and the second electrode of the third switching transistor is grounded. In the embodiments of the present application, the second switch circuit is constructed based on the switching transistor, and can cooperate with the trigger circuit to implement the sleep function, thereby widening an application scope of the circuit.

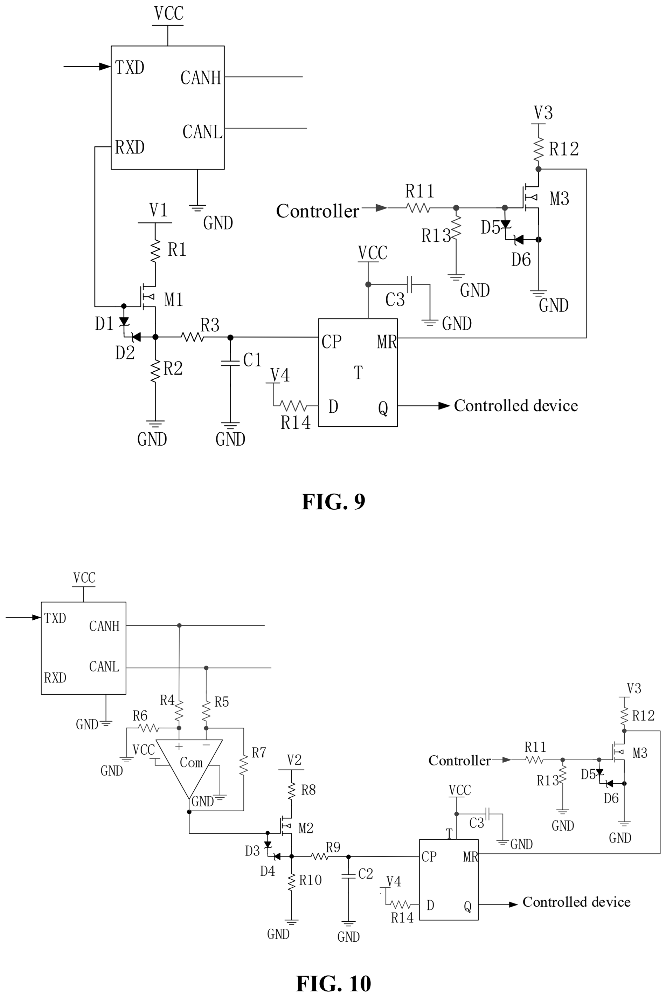

According to some embodiments of the present application, referring to FIG. 9 and FIG. 10, the trigger circuit 22 includes a trigger T, an input port D of the trigger T is connected to a fourth power supply terminal V4, a trigger port CP of the trigger T is connected to the first switch circuit 211, a set port MR of the trigger T is connected to the second switch circuit 212, and an output port Q of the trigger T is connected to the controlled device.

In the embodiments of the present application, the trigger circuit 22 includes the trigger T, a resistor R14, and a capacitor C3. The trigger T is provided with the input port D, the trigger port CP, the set port MR, and the output port Q. The input port CP of the trigger T is connected to a first end of the resistor R14, and a second end of the resistor R14 is connected to the fourth power supply terminal V4; the trigger port CP of the trigger T is connected to the second electrode of the switching transistor in the first switch circuit 211; the set port MR of the trigger T is connected to the first electrode of the switching transistor in the second switch circuit 212; and the output port Q of the trigger T is connected to the controlled device. In some embodiments, devices such as diodes and resistors may be connected between the output port Q of the trigger T and the controlled device.

In the stage of waking up the controlled device, the switching transistor in the first switch circuit 211 is turned on, and the high-level signal is input to the trigger port CP of the trigger T from the second electrode of the switching transistor. Since the input port D of the trigger T is connected to the fourth power supply terminal V4 through the resistor R13, the trigger T outputs the high-level signal to the controlled device after receiving the high-level signal at the trigger port CP, and the high-level signal is used to wake up the controlled device. In this stage, the external controller does not output the second control signal to the second switch circuit 212. Therefore, the switching transistor in the second switch circuit 212 is turned off, and the set port MR of the trigger T receives the high-level signal, and the trigger T is not set.

In a sleep stage of the controlled device, the controller outputs the high-level signal, i.e., the second control signal, to the second switch circuit 212, the switching transistor in the second switch circuit 212 is turned on, the trigger T receives the low-level signal at the set port MR, and the trigger T is set. The trigger T outputs the low-level signal to the controlled device, and the low-level signal instructs the controlled device to enter a sleep state.

In the above embodiments, the trigger circuit includes the trigger, the input port of the trigger is connected to the fourth power supply terminal, the trigger port of the trigger is connected to the first switch circuit, the set port of the trigger is connected to the second switch circuit, and the output port of the trigger is connected to the controlled device. In the embodiments of the present application, the trigger circuit is constructed based on the trigger so as to implement the wake-up function and the sleep function, thereby widening the application scope of the circuit.

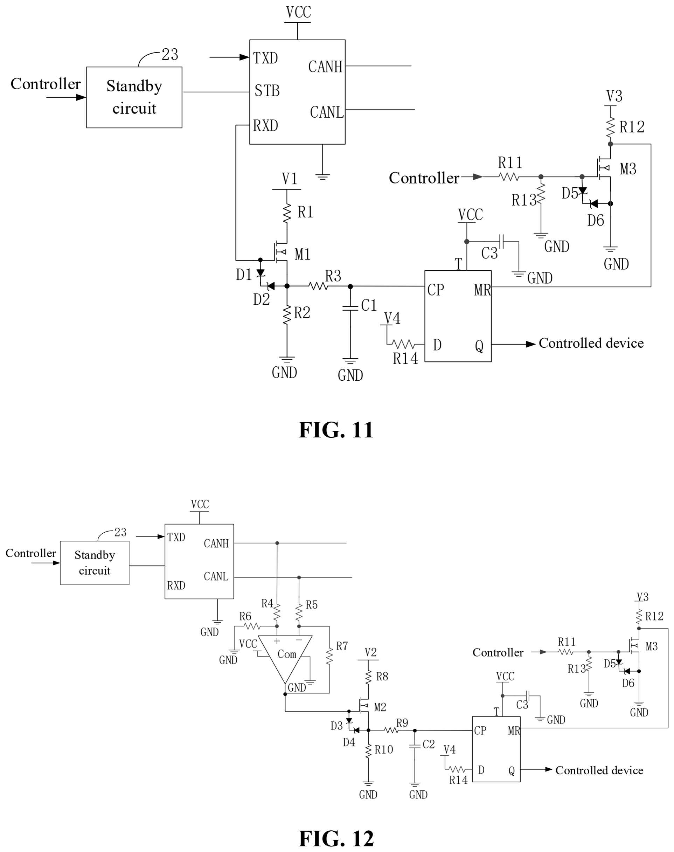

According to some embodiments of the present application, referring to FIG. 11 and FIG. 12, the control circuit further includes a standby circuit 23, and the standby circuit 23 is connected to both the CAN transceiver 10 and the controller; and the standby circuit 23 is configured to acquire a third control signal output by the controller, and output a standby signal to the CAN transceiver 10 under the control of the third control signal.

In the embodiments of the present application, the control circuit further includes the standby circuit 23, and the standby circuit 23 is connected to both the CAN transceiver 10 and the external controller.

In the stage of putting the controlled device into a sleep mode, the external controller outputs the third control signal to the standby circuit 23 after determining that the trigger circuit 22 outputs the sleep signal. The standby circuit 23 receives the third control signal and outputs the standby signal to the CAN transceiver 10; and the standby signal is used to instruct the CAN transceiver to enter the standby state.

In the above embodiments, the control circuit also includes the standby circuit, and the standby circuit is connected to both the CAN transceiver and the controller; and the standby circuit acquires the third control signal output by the controller and outputs the standby signal to the CAN transceiver under the control of the third control signal. In the embodiments of the present application, the CAN transceiver enters a standby mode through the standby circuit, such that the power consumption of the circuit can be reduced.

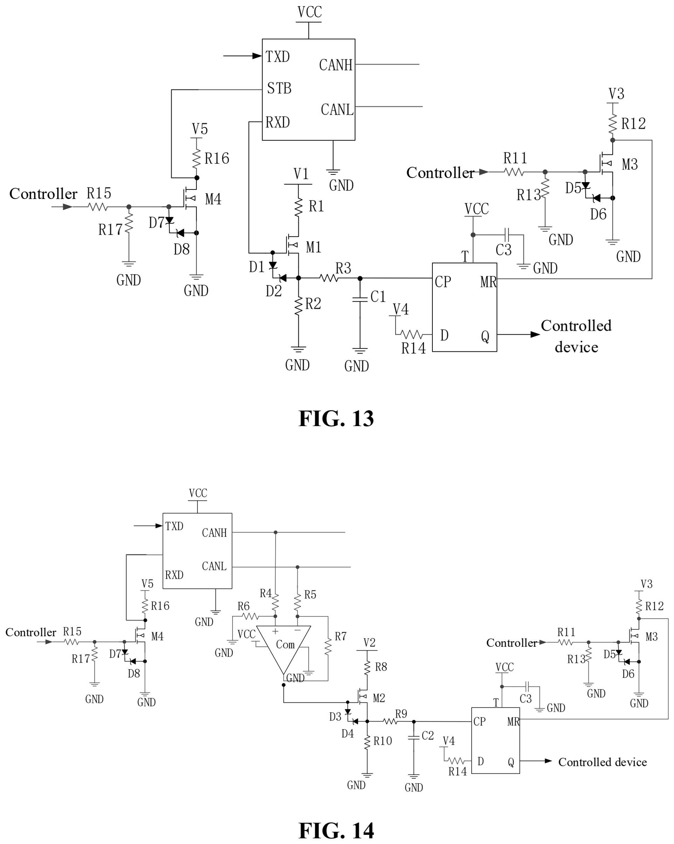

According to some embodiments of the present application, as shown in FIG. 13 and FIG. 14, the standby circuit 23 includes a fourth switching transistor M4; a control electrode of the fourth switching transistor M4 is connected to the controller, a first electrode of the fourth switching transistor M4 is connected to both a fifth power supply terminal V5 and a standby port STB of the CAN transceiver 10, and a second electrode of the fourth switching transistor M4 is grounded.

In the embodiments of the present application, the standby circuit 23 includes the fourth switching transistor M4, a resistor R15, a resistor R16, a resistor R16, a diode D7, and a diode D8. The control electrode of the fourth switching transistor M4 is connected to a first end of the resistor R15, and a second end of the resistor R15 is connected to the controller; the first electrode of the fourth switching transistor M4 is connected to a first end of the resistor R16, and a second end of the resistor R16 is connected to the fifth power supply terminal V5; and the second electrode of the fourth switching transistor M4 is grounded. The CAN transceiver 10 is provided with the standby port STB, and the first electrode of the fourth switching transistor M4 is also connected to the standby port STB of the CAN transceiver 10. A first end of the resistor R17 is connected to the control electrode of the fourth switching transistor M4, and a second end of the resistor R17 is grounded.

Taking the fourth switching transistor M4 as an NMOS transistor as an example, in the stage of putting the controlled device into a sleep mode, the external controller outputs the low-level signal, that is, the third control signal, to the fourth switching transistor M4 after determining that the trigger circuit 22 outputs the sleep signal; the fourth switching transistor M4 is turned off, and the potential of the standby port STB of the CAN transceiver 10 is pulled high, that is, the standby port STB of the CAN transceiver 10 receives the high-level signal; and the CAN transceiver 10 enters the standby state according to the high-level signal.

The above diode D7 and diode D8 play a clamping role, which limits a value of a voltage difference between the control electrode and the second electrode of the fourth switching transistor M4, thereby protecting the fourth switching transistor M4. The above standby circuit may be implemented by a switch chip, which is not limited in the embodiments of the present application.

The first power supply terminal, the second power supply terminal, the third power supply terminal, the fourth power supply terminal, and the fifth power supply terminal in the above embodiments can be set to power supply terminals of the same voltage or power supply terminals of different voltages, which is not limited in the embodiments of the present application.

In the above embodiments, the standby circuit includes the fourth switching transistor; and the control electrode of the fourth switching transistor is connected to the controller, the first electrode of the fourth switching transistor is connected to both the fifth power supply terminal and the standby port of the CAN transceiver, and the second electrode of the fourth switching transistor is grounded. In the embodiments of the present application, the standby circuit is constructed based on the switching transistor, so that the CAN transceiver can enter the standby mode after the controlled device enters a sleep mode, thereby reducing the power consumption of the circuit.

According to some embodiments of the present application, a wake-up and sleep method is provided, which is illustrated by the control circuit applied to the above embodiments. The method may include: generating a first control signal according to a CAN bus message, and outputting a wake-up signal to a controlled device external to the control circuit according to the first control signal; and acquiring a second control signal, and outputting a sleep signal to the controlled device according to the second control signal.

Referring to FIG. 9 , in a stage of waking up the controlled device, a CAN transceiver 10 receives the CAN bus message from a data input port TXD, and outputs a high-level signal from a data output port RXD according to the CAN bus message; and a first switching transistor M1 is turned on under the control of the high-level signal, and outputs the high-level signal to a trigger port CP of a trigger T. The trigger T outputs the high-level signal to the controlled device according to the high-level signal to wake up the controlled device.

In the stage of putting the controlled device into a sleep mode, the external controller inputs the high-level signal to the third switching transistor M3, the third switching transistor M3 is turned on under the control of the high-level signal, and the potential of the second electrode of the third switching transistor M3 is pulled low. A set port of the trigger T receives a low-level signal, and an output signal of the trigger T is set, so that the trigger T outputs the low-level signal to the controlled device, and the low-level signal causes the controlled device to enter a sleep state.

Taking the controlled device as a power supply as an example, the power supply enters the sleep state and no longer supplies power to the controller, the controller stops working and outputs the low-level signal to a data input port TXD of the CAN transceiver 10. After receiving the low-level signal from the data input port TXD, the CAN transceiver 10 outputs the low-level signal from the data output port RXD. The first switching transistor M1 is turned off under the control of the low-level signal, and the potential of the second electrode of the first switching transistor M1 is pulled low. The trigger port CP of the trigger T receives the low-level signal, and the trigger T is no longer triggered.

After the controller stops working, it also inputs the low-level signal to the standby circuit 23, and the standby circuit 23 inputs the high-level signal to the standby port STB of the CAN transceiver according to the low-level signal. The CAN transceiver enters a standby mode according to the high-level signal.

Referring to FIG. 10, in the stage of waking up the controlled device, the CAN transceiver 10 receives the CAN bus message from the data input port TXD, outputs the high-level signal from the high-level port CANH according to the CAN bus message, and outputs the low-level signal from the low-level port CANL. A comparator Com receives the high-level signal at a forward input port and receives the low-level signal at a reverse input port, and outputs the high-level signal from the output port according to the received high-level signal and low-level signal. The second switching transistor M2 is turned on under the control of the high-level signal, and outputs the high-level signal to the trigger port CP of the trigger T. The trigger T outputs the high-level signal to the controlled device according to the high-level signal to wake up the controlled device.

In the stage of putting the controlled device into a sleep mode, the external controller inputs the high-level signal to the third switching transistor M3, the third switching transistor M3 is turned on under the control of the high-level signal, and the potential of the second electrode of the third switching transistor M3 is pulled low. The set port of the trigger T receives the low-level signal, and the trigger T is set, so that the trigger T outputs the low-level signal to the controlled device, and the low-level signal causes the controlled device to enter the sleep state.

Taking the controlled device as a power supply as an example, the power supply enters the sleep state and stops supplying power to the controller. The controller stops working and outputs the low-level signal to the data input port TXD of the CAN transceiver 10. After the CAN transceiver 10 receives the low-level signal from the data input port TXD, both the high-level port CANH and the low-level port CANL of the CAN transceiver 10 output the low-level signal. The first switching transistor M1 is turned off under the control of the low-level signal, the potential of the second electrode of the first switching transistor M1 is pulled low, the trigger port CP of the trigger T receives the low-level signal, and the trigger T is no longer triggered.

After stops working, the controller also inputs the low-level signal to the standby circuit 23, and the standby circuit 23 inputs the high-level signal to the standby port STB of the CAN transceiver according to the low-level signal. The CAN transceiver enters a standby mode according to the high-level signal.

In the above embodiments, the control circuit generates the first control signal according to the CAN bus message, and outputs the wake-up signal to the controlled device external to the control circuit according to the first control signal; and acquires the second control signal, and outputs the sleep signal to the controlled device according to the second control signal. In the embodiments of the present application, the control circuit can implement the wake-up function and the sleep function, and therefore the circuit has a wide range of applications; and the circuit is constructed based on the CAN transceiver, and the CAN transceiver has low costs, which can facilitate reducing the production costs of the electric vehicles.

According to some embodiments of the present application, a battery management system is provided. The battery management system includes the control circuit in the above embodiments.

In the embodiments of the present application, the power management system includes a controller, a controlled device, and the control circuit in the above embodiments. The control circuit includes a CAN transceiver, a signal circuit, and a standby circuit which are connected to each other; and the signal circuit includes a first switch circuit, a second switch circuit, and a trigger circuit.

Taking the controller as an MCU in the power management system and the controlled device as a power supply in the power management system as an example, the CAN transceiver in the control circuit receives a CAN bus message and outputs a first control signal to the first switch circuit according to the CAN bus message. The first switch circuit outputs a trigger signal to the trigger circuit according to the first control signal; and the trigger circuit outputs a wake-up signal to the power supply according to the trigger signal to wake up the power supply. After being woken up, the power supply continues to supply power to the MCU.

The MCU receives the CAN bus message and outputs a second control signal to the second switch circuit. The second switch circuit outputs a set signal to the trigger circuit according to the second control signal; and the trigger circuit outputs a sleep signal to the power supply according to the set signal. After receiving the sleep signal, the power supply enters a sleep state and stops supplying power to the MCU. The MCU also enters a sleep state and outputs a low-level signal to the CAN transceiver and the standby circuit in the control circuit. After receiving the low-level signal, the CAN transceiver outputs the low-level signal to the first switch circuit, and the first switch circuit no longer outputs the trigger signal to a trigger. After receiving the low-level signal, the standby circuit connects a standby port of the CAN transceiver to a fifth power supply terminal, so that the standby port of the CAN transceiver receives a high-level signal. The CAN transceiver enters a standby state according to the high-level signal. The power management system enters a low power consumption mode.

In the above embodiments, the power management system includes the controller, the controlled device, and the control circuit; the control circuit enables the power management system to have the functions of automatically waking up the power supply and automatically putting the power supply into a sleep mode, so that the power management system has more comprehensive functions. Moreover, the control circuit is constructed based on the CAN transceiver, and the CAN transceiver has low costs, which can facilitate reducing the costs of the power management system.

According to some embodiments of the present application, a vehicle is provided. The vehicle includes a controller, a controlled device, and the control circuit in the above embodiments.

In the embodiments of the present application, the vehicle includes a CAN bus, a controller, a controlled device, and the control circuit in the above embodiments. The control circuit includes a CAN transceiver, a signal circuit, and a standby circuit which are connected to each other; and the signal circuit includes a first switch circuit, a second switch circuit, and a trigger circuit.

Taking the controller as an MCU in the vehicle and the controlled device as a power supply in the vehicle as an example, after a whole vehicle system is turned on, the CAN bus sends a CAN bus message. The CAN transceiver in the control circuit receives the CAN bus message, and outputs a first control signal to the first switch circuit according to the CAN bus message. The first switch circuit outputs a trigger signal to the trigger circuit according to the first control signal; and the trigger circuit outputs a wake-up signal to the power supply according to the trigger signal to wake up the power supply. After being woken up, the power supply continues to supply power to the MCU.

After the whole vehicle system is shut down, the CAN bus sends the CAN bus message. The MCU receives the CAN bus message and outputs a second control signal to the second switch circuit. The second switch circuit outputs a set signal to the trigger circuit according to the second control signal; and the trigger circuit outputs a sleep signal to the power supply according to the set signal. After receiving the sleep signal, the power supply enters a sleep state and stops supplying power to the MCU. The MCU also enters a sleep state and outputs a low-level signal to the CAN transceiver and the standby circuit in the control circuit. After receiving the low-level signal, the CAN transceiver outputs the low-level signal to the first switch circuit, and the first switch circuit no longer outputs the trigger signal to a trigger. After receiving the low-level signal, the standby circuit connects a standby port of the CAN transceiver to a fifth power supply terminal, so that the standby port of the CAN transceiver receives a high-level signal. The CAN transceiver enters a standby state according to the high-level signal. The whole vehicle system enters a low power consumption mode.

In the above embodiments, the vehicle includes the controller, the controlled device, and the control circuit. The control circuit enables the vehicle to have the functions of automatically waking up the power supply and automatically putting the power supply into a sleep mode, so that the vehicle has more comprehensive functions. Moreover, the control circuit is constructed based on the CAN transceiver, and the CAN transceiver has low costs, which can facilitate reducing the production costs of the vehicle, thereby improving the cost performance of the vehicle.

The technical features of the above embodiments can be combined arbitrarily. In order to make the description concise, not all possible combinations of the technical features in the above embodiments are described. However, all the combinations of the technical features should be considered as falling within the scope recorded in this specification provided that they do not conflict with each other.

The above embodiments only describe several implementations of the present application for a specific and detailed understanding of the technical solution of the present application, but should not be construed as a limitation to the protection scope of the patent of the present invention. It should be noted that those of ordinary skill in the art may further make some variations and improvements without departing from the concept of the present application, all of which fall within the scope of protection of the present application. It should be understood that the technical solutions obtained by those skilled in the art through logical analysis, reasoning or limited experiments on the basis of the technical solutions provided in the present application are all within the protection scope of the attached claims described in the present application. Therefore, the scope of protection of the patent of the present application should be determined by the appended claims, and the specification and drawings can be used to explain the content of the claims.

## Claims

1. A control circuit, comprising a CAN transceiver and a signal circuit connected to each other, wherein the signal circuit is connected to an external controlled device and a controller;
the CAN transceiver is configured to output a first control signal to the signal circuit according to a CAN bus message; and
the signal circuit is configured to output a wake-up signal to the controlled device according to the first control signal, and output a sleep signal to the controlled device according to a second control signal output by the controller.

2. The control circuit according to claim 1, wherein the signal circuit comprises a switch circuit and a trigger circuit; the switch circuit is connected to the CAN transceiver and the controller, and the trigger circuit is connected to the switch circuit and the controlled device;
the switch circuit is configured to output a trigger signal to the trigger circuit according to the first control signal, and output a set signal to the trigger circuit according to the second control signal; and
the trigger circuit is configured to output the wake-up signal to the controlled device according to the trigger signal, and output the sleep signal to the controlled device according to the set signal.

3. The control circuit according to claim 2, wherein the switch circuit comprises a first switch circuit and a second switch circuit; the first switch circuit is connected to both the CAN transceiver and the trigger circuit; the second switch circuit is connected to both the trigger circuit and the controller;
the first switch circuit is configured to output the trigger signal to the trigger circuit under the control of the first control signal; and
the second switch circuit is configured to output the set signal to the trigger circuit under the control of the second control signal.

4. The control circuit according to claim 3, wherein the first switch circuit is connected to a data output port of the CAN transceiver; and
the first switch circuit is configured to acquire the first control signal output by the data output port of the CAN transceiver, and output the trigger signal under the control of the first control signal.

5. The control circuit according to claim 4, wherein the first switch circuit comprises a first switching transistor; and
a control electrode of the first switching transistor is connected to the data output port of the CAN transceiver, a first electrode of the first switching transistor is connected to a first power supply terminal, and a second electrode of the first switching transistor is connected to the trigger circuit.

6. The control circuit according to claim 3, wherein the first switch circuit is connected to both a high-level port and a low-level port of the CAN transceiver; and
the first switch circuit is configured to acquire the first control signal output by the high-level port and the low-level port, and output the trigger signal under the control of the first control signal.

7. The control circuit according to claim 6, wherein the first switch circuit comprises a comparator and a second switching transistor; and
two input ports of the comparator are connected to the high-level port and the low-level port of the CAN transceiver, respectively, and an output port of the comparator is connected to a control electrode of the second switching transistor; and a first electrode of the second switching transistor is connected to a second power supply terminal, and a second electrode of the second switching transistor is connected to the trigger circuit.

8. The control circuit according to claim 3, wherein the second switch circuit comprises a third switching transistor; and
a control electrode of the third switching transistor is connected to the controller, a first electrode of the third switching transistor is connected to both a third power supply terminal and the trigger circuit, and a second electrode of the third switching transistor is grounded.

9. The control circuit according to claim 3, wherein the trigger circuit comprises a trigger, an input port of the trigger is connected to a fourth power supply terminal, a trigger port of the trigger is connected to the first switch circuit, a set port of the trigger is connected to the second switch circuit, and an output port of the trigger is connected to the controlled device.

10. The control circuit according to any one of claims 1 to 9, wherein the control circuit further comprises a standby circuit, and the standby circuit is connected to both the CAN transceiver and the controller; and
the standby circuit is configured to acquire a third control signal output by the controller, and output a standby signal to the CAN transceiver under the control of the third control signal.

11. The control circuit according to claim 10, wherein the standby circuit comprises a fourth switching transistor; and
a control electrode of the fourth switching transistor is connected to the controller, a first electrode of the fourth switching transistor is connected to both a fifth power supply terminal and a standby port of the CAN transceiver, and a second electrode of the fourth switching transistor is grounded.

12. A wake-up and sleep method, applied to the control circuit according to any one of claims 1 to 11, the method comprising:
generating a first control signal according to a CAN bus message, and outputting a wake-up signal, according to the first control signal, to a controlled device external to the control circuit; and
acquiring a second control signal, and outputting a sleep signal to the controlled device according to the second control signal.

13. A battery management system, comprising a controller, a controlled device, and the control circuit according to any one of claims 1 to 11.

14. A vehicle, comprising a controller, a controlled device, and the control circuit according to any one of claims 1 to 11.
